# EUROPEAN PATENT SPECIFICATION

(11) **EP 4 361 611 B1**
(45) Date of publication and mention of the grant of the patent: **17.06.2026**
(21) Application number: 23206064.0
(22) Date of filing: 26.10.2023
(51) Int. Cl.: G01N 21/84, G01N 21/78

(54) **MEASUREMENT SYSTEM**
MESSSYSTEM
SYSTÈME DE MESURE

(30) Priority: 31.10.2022 JP 2022174907; 06.10.2023 JP 2023174612
(43) Date of publication of application: 01.05.2024
(73) Proprietor: ARKRAY, Inc., Kyoto-shi, Kyoto 601-8045 (JP)
(72) Inventor: ODAGAKI, Toru, Kyoto-shi, Kyoto, 602-0008 (JP)
(74) Representative: Hoffmann Eitle

(56) References cited:
- US-A1- 2014 072 189
- US-A1- 2016 125 600
- US-A1- 2016 267 195
- US-A1- 2022 252 577

## Description

### BACKGROUND

### Technical Field

The present invention relates to a measurement system that specifies information related to measurement of a measurement target.

### Related Art

Japanese Patent Application Laid-Open (JP-A) No. S57-43142 discloses a technique for assigning a specific temperature to each of plural light sources and displaying a corresponding temperature by turning on a specific light source. JP-A No. 2015-91089 discloses a technique for expressing an error state of a device by a turning-on pattern and a color of an LED. US 2014/0072189 A1 relates to portable medical diagnostic systems and methods using a mobilde device.

### SUMMARY

The present invention is defined by the independent claims. Preferred embodiments are defined by the dependent claims. Further aspects are provided for facilitating the understanding of the invention. Exemplary embodiments of the present disclosure provide a measurement system in which a measurement device that includes a camera can specify information related to measurement, such as an environmental temperature acquired by a housing, with simple components.

A measurement system according to an aspect of the disclosure includes a housing and a measurement device. The housing includes a related information acquisition sensor that acquires related information which is information related to measurement of a measurement target, and a display light source that generates display light which is light corresponding to the related information acquired by the related information acquisition sensor. The measurement device includes a correspondence relationship storage that stores a correspondence relationship between the related information and the display light in advance, a camera that images the display light to acquire an image, and an information specifying unit that analyzes the image to identify the display light, applies the identified display light to the correspondence relationship stored in the correspondence relationship storage, and specifies the related information.

According to the exemplary embodiment of the disclosure, a measurement system is provided in which a measurement device that includes a camera can specify the information related to the measurement, such as the environmental temperature acquired by the housing, with simple components.

### BRIEF DESCRIPTION OF THE DRAWINGS

Exemplary embodiments will be described in detail based on the following figures, wherein:
Fig. 1 is an upper perspective view illustrating a holding unit that is a part of a housing of an exemplary embodiment;
Fig. 2 is an enlarged lower perspective view of the vicinity of an insertion port of the holding unit;
Fig. 3 is a plan view of a test strip used in the exemplary embodiment;
Fig. 4 is an upper perspective view illustrating a state in which the test strip is attached to the holding unit;
Fig. 5 illustrates the state of Fig. 4 in plan view;
Fig. 6 is an upper perspective view illustrating a mounting unit used in the exemplary embodiment;
Fig. 7 illustrates the mounting unit in bottom view;
Fig. 8 is an upper perspective view of the housing of the exemplary embodiment;
Fig. 9 is an upper perspective view illustrating a state in which the test strip is attached to the housing of Fig. 8;
Fig. 10 illustrates a measurement device used in the exemplary embodiment in bottom view;
Fig. 11 is an upper perspective view of a measurement system of the exemplary embodiment;
Fig. 12 is an upper perspective view illustrating a state in which a part of an outer wall portion is removed from the measurement system of Fig. 11;
Fig. 13 illustrates a cross section taken along line XIII-XIII of Fig. 12;
Fig. 14 is a functional block diagram of the measurement system of the exemplary embodiment;
Fig. 15 is a block diagram illustrating a controller;
Fig. 16 is a flowchart illustrating an outline of specifying related information in the measurement system of the exemplary embodiment;
Fig. 17 is a flowchart illustrating an outline of a method of measuring a measurement target in the measurement system of the exemplary embodiment; and
Fig. 18 is a flowchart illustrating the outline of a method of measuring the measurement target in the measurement system of the exemplary embodiment.

### DETAILED DESCRIPTION

Hereinafter, exemplary embodiments of the disclosure will be described with reference to the drawings. Reference numerals common in each of the drawings indicate the same portions without any particular description. In addition, each member and each portion illustrated in each drawing are merely schematically drawn, and a size and a positional relationship of an actual product are not necessarily accurately expressed.

### (1) Holding Unit

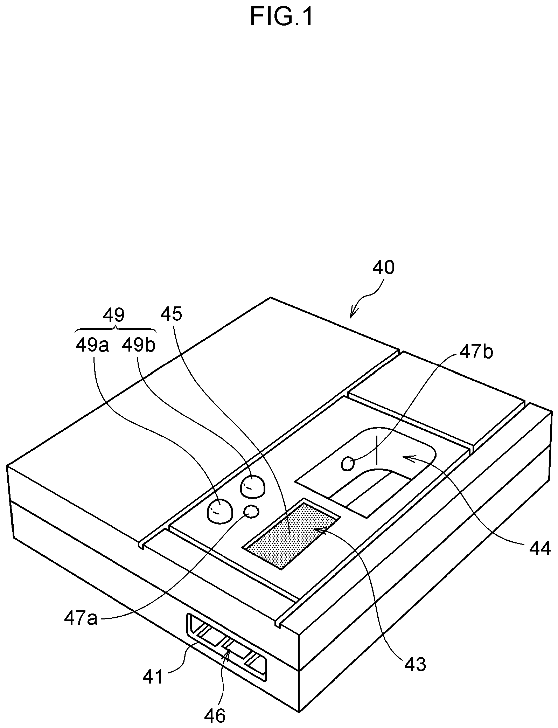

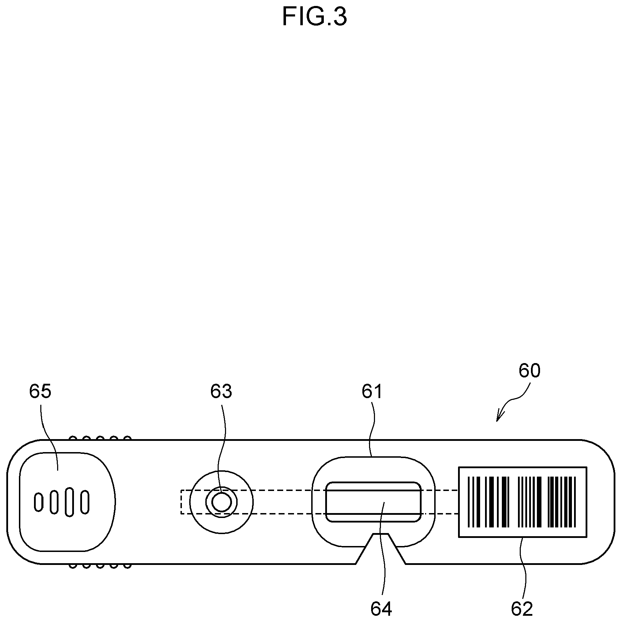

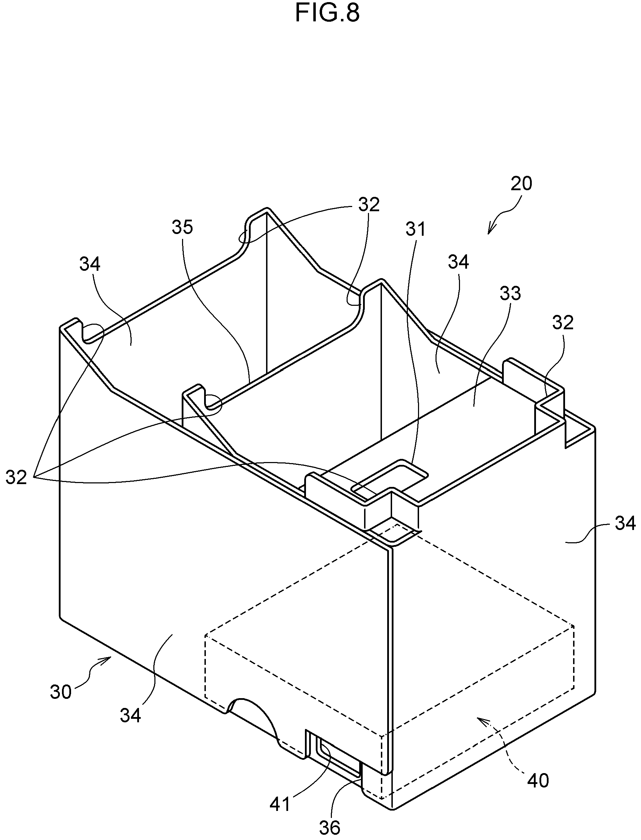

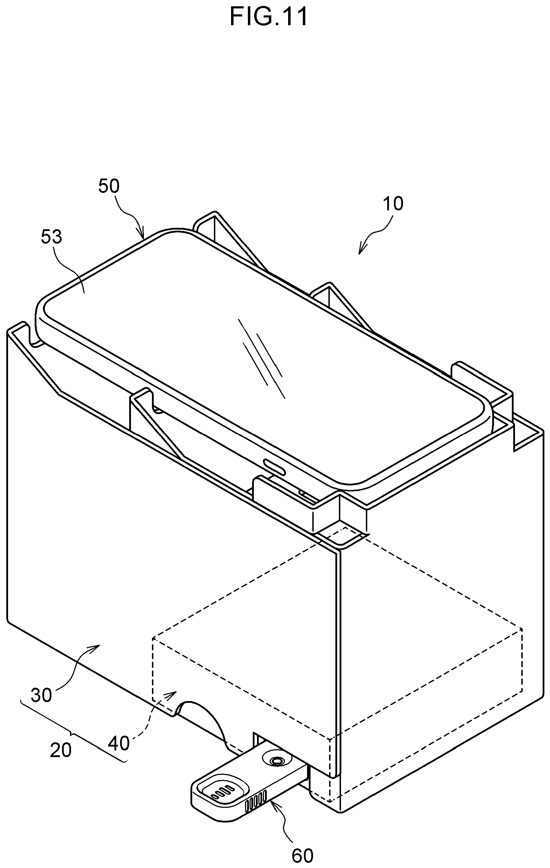

Fig. 1 is an upper perspective view illustrating a holding unit 40 used in a measurement system 10 (see Fig. 11) of the present exemplary embodiment. In the measurement system 10 of the disclosure, the holding unit 40 as illustrated in Fig. 1 may be included as a member constituting a housing 20 (see Fig. 8). The holding unit 40 has a box shape, and two openings of a measurement opening portion 43 and an identification opening portion 44 are formed on an upper surface. An optical filter 45 is fitted into the measurement opening portion 43. An illumination sensor 47a that senses light, and a display light source 49 including two light sources, that is, a first light emitter 49a and a second light emitter 49b are provided in the upper surface. An insertion port 41 into which a test strip 60 (see Fig. 3) described later is inserted is opened in a side surface of the holding unit 40. An internal space of the insertion port 41 is a holder 46 as a space which is communicatively connected with the measurement opening portion 43 and the identification opening portion 44 and in which a part of the test strip 60 to which a measurement target is applied is housed. A related information acquisition sensor 47b that acquires related information related to measurement of the measurement target, specifically, an environmental temperature is provided on a side wall of the holder 46 in the identification opening portion 44. The related information acquisition sensor 47b is preferably a non-contact temperature sensor. A position at which the temperature sensor as the related information acquisition sensor 47b is provided is not limited to this position, and, for example, the temperature sensor may be provided near a portion at which a measurement region 61 described later is positioned when the test strip 60 is housed in the holder 46, such as an inside of the measurement opening portion 43.

Note that examples of the related information include information that may influence measurement, such as humidity information and carbon dioxide concentration information, in addition to temperature information. The related information acquisition sensor 47b can be a sensor having a structure and performance corresponding to information to be acquired. In addition, the related information acquisition sensor 47b is not limited to the temperature sensor, and may be an insertion detection sensor capable of detecting the number of times of insertion of the test strip 60, and such an insertion detection sensor is preferably provided near the insertion port 41. Since the number of times of use of a measurement light source 42 described later can be estimated by such an insertion detection sensor detecting the number of times of insertion, a degree of wear of the measurement light source 42, which is information related to the measurement of the measurement target, can be indirectly acquired. In addition, a light quantity measurement sensor that measures a light quantity of the measurement light source 42 may be provided as the related information acquisition sensor 47b. With such a light quantity measurement sensor, it is possible to acquire the degree of wear of the light quantity of the measurement light source 42 as the information related to the measurement of the measurement target.

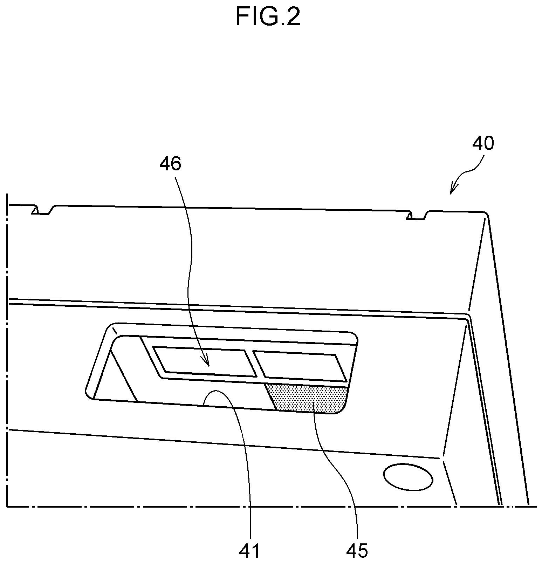

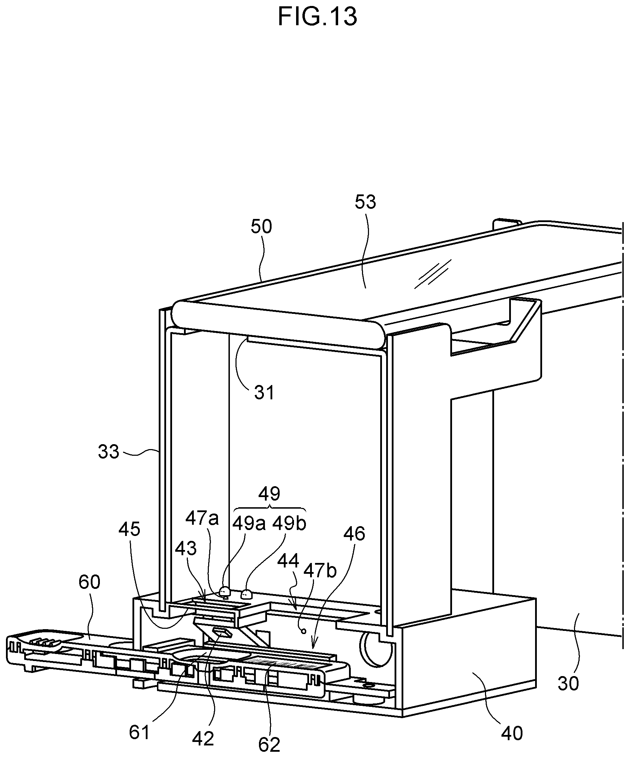

Fig. 2 is an enlarged lower perspective view of the vicinity of the insertion port 41 of the holding unit 40. The measurement light source 42 (see Fig. 13) provided inside the holder 46 emits light including a light beam having a wavelength suitable for imaging the measurement region 61. Then, the optical filter 45 has optical characteristics of suitably transmitting only the light beam having the wavelength suitable for the imaging.

### (2) Test Strip

Fig. 3 illustrates the test strip 60 used in the measurement system 10 (see Fig. 11) of the present exemplary embodiment in plan view. The test strip 60 has a flat rod-shaped outer shape. A grip portion 65 whose upper surface side is recessed is formed at one end of the test strip 60, and the test strip 60 can be gripped with fingers by holding the grip portion 65. A test paper 64 having an elongated shape along a longitudinal direction of the test strip 60 is housed in the test strip 60. The test paper 64 is exposed upward at two openings formed in the upper surface of the test strip 60. Among these two openings, the opening closer to the grip portion 65 is a sample spotting unit 63, and the opening farther from the grip portion 65 is the measurement region 61 in which the measurement of the measurement target is performed. Further, an identification region 62 in which information on the test strip 60 is recorded is formed in another end side of the test strip 60, that is, on an upper surface of a portion farthest from the grip portion 65. Hereinafter, with respect to the test strip 60, a side close to the grip portion 65 is referred to as an "upstream side", and a side close to the identification region 62 is referred to as a "downstream side".

The test paper 64 is obtained by applying a water absorbing layer to a front surface of a water absorbent such as a filter paper or a synthetic resin substrate. The test paper 64 contains a reagent that reacts with the measurement target to develop color. A sample assumed to contain the measurement target is spotted to the sample spotting unit 63. Examples of the sample include a liquid specimen collected from a living body, for example, blood or urine, or a diluent obtained by diluting the blood or urine with an appropriate solvent, or a solid or mucus collected from a living body, or a liquid specimen obtained by diluting or suspending the solid or mucus in an appropriate solvent. Examples of the measurement target include a component contained in the liquid specimen, or an antigen derived from an exogenous microorganism or virus.

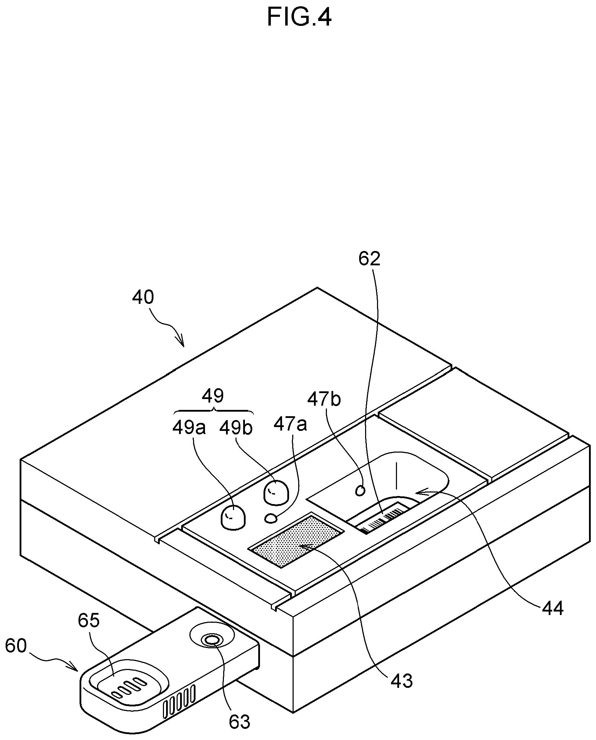

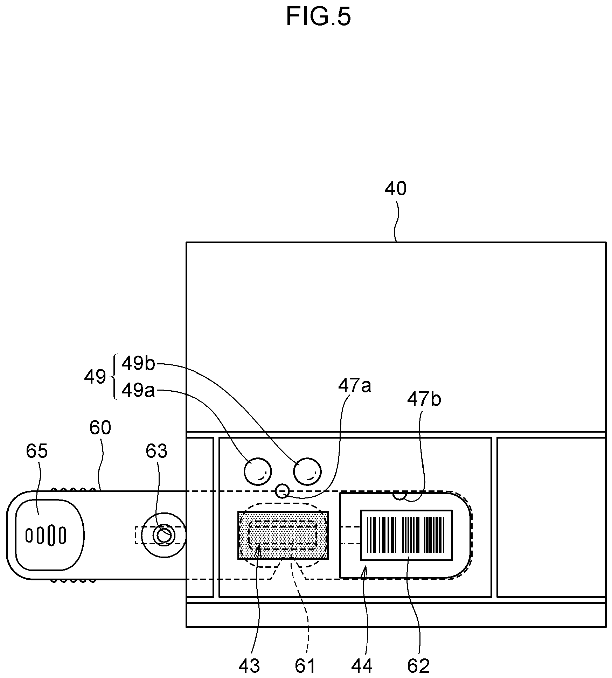

Fig. 4 is an upper perspective view illustrating a state in which the test strip 60 is attached to the holding unit 40. In addition, Fig. 5 illustrates this state in plan view. As illustrated in Fig. 4 and Fig. 5, the test strip 60 is inserted into the holder 46 from the insertion port 41 with the downstream side first. In this state, as illustrated in Fig. 5, the measurement region 61 is at the same plane position as the measurement opening portion 43, and the identification region 62 is at the same plane position as the identification opening portion 44.

In this state, for example, when the liquid specimen is spotted to the sample spotting unit 63, the liquid specimen flows in the test paper 64 to the downstream side by a capillary phenomenon, and a control reaction zone indicating the spotting of the liquid specimen is generated in the measurement region 61. Further, in a case in which the measurement target is contained in the liquid specimen, a target reaction zone having a strength corresponding to a concentration of the measurement target is generated. The measurement system 10 of the present exemplary embodiment measures the concentration of the measurement target by emitting light emitted from the measurement light source 42 to the target reaction zone and measuring the intensity of the generated light. For example, identification information, which is information related to the test strip 60, such as what type of the test paper 64 is housed in the test strip 60, is recorded in the identification region 62 described above. Examples of the identification information include a barcode, a QR code (registered trademark), and the like. In addition, as will be described later, an internal environmental temperature of the holder 46 in a state in which the test strip 60 is inserted is acquired by the related information acquisition sensor 47b.

### (3) Mounting Unit

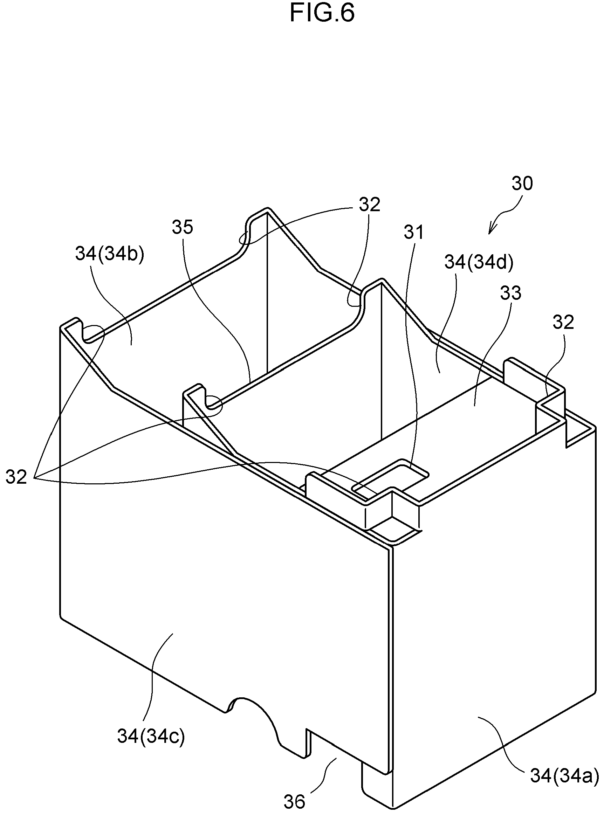

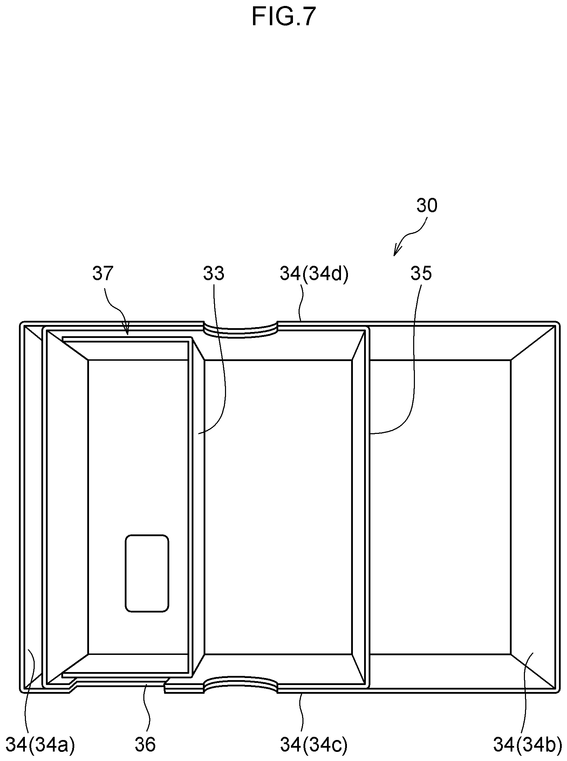

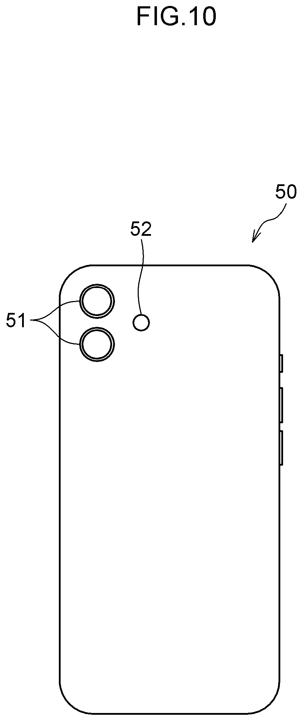

Fig. 6 is an upper perspective view illustrating a mounting unit 30 used in the measurement system 10 (see Fig. 11) of the present exemplary embodiment. In addition, Fig. 7 illustrates the mounting unit 30 in bottom view. The mounting unit 30 is a paper box having a substantially rectangular parallelepiped shape with an upper surface and a lower surface opened. Four side surfaces of the mounting unit 30 form an outer wall portion 34 erecting vertically. An attachment part 32 which is a frame on which a measurement device 50 (see Fig. 10) described later is mounted, are formed on an upper surface of the mounting unit 30. On one side (hereinafter, referred to as a "front side".) of an inside of the attachment part 32, a box-shaped light shielding unit 33 in which an upper surface is closed while a measurement window 31 is opened and a lower surface is opened is formed (see Fig. 7).

Here, among the four surfaces of the outer wall portion 34, the surface on a side on which the light shielding unit 33 is positioned is referred to as a front surface 34a, the surface on an opposite side thereof is referred to as a back surface 34b, the surface on a left side as viewed from the front surface 34a is referred to as a left side surface 34c, and the surface on an opposite side thereof is referred to as a right side surface 34d. In addition, the inside of the mounting unit 30 is partitioned by a reinforcing unit 35 parallel with the front surface 34a, the back surface 34b. Further, a rectangular cutout portion 36 is formed at a front lower edge of the left side surface 34c.

### (4) Housing

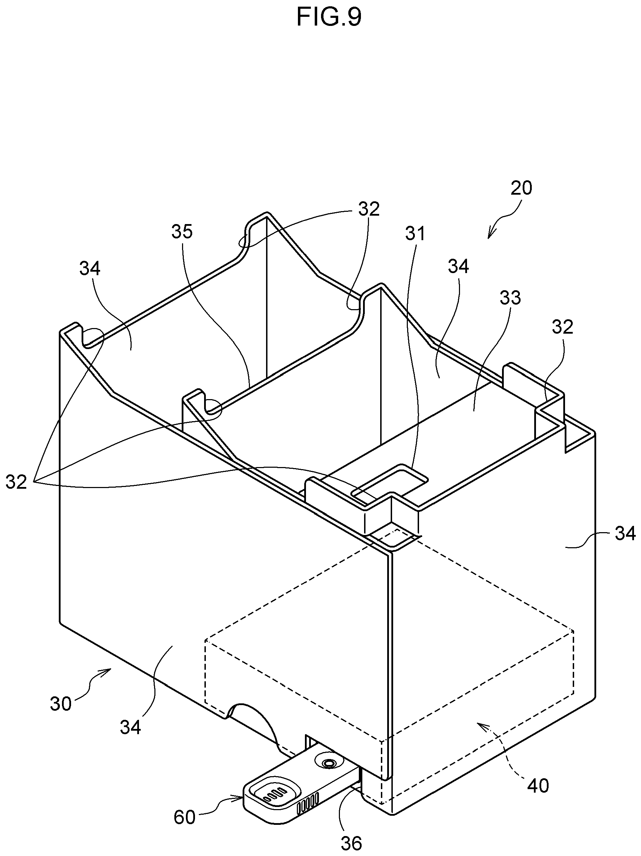

As illustrated in Fig. 7, a gap is formed between a lower edge of the light shielding unit 33 and a lower edge of the outer wall portion 34, and a space surrounded by the front surface 34a, the reinforcing unit 35, the left side surface 34c, and the right side surface 34d in four directions with this gap as a height is referred to as a housing region 37. When the holding unit 40 is attached to the housing region 37, the housing 20 illustrated in Fig. 8 is formed. In this state, the cutout portion 36 of the mounting unit 30 and the insertion port 41 of the holding unit 40 coincide with each other. A state in which the test strip 60 is attached to the insertion port 41 in this state as illustrated in Fig. 4 and Fig. 5 is as illustrated in an upper perspective view illustrated in Fig. 9. In this state, the housing 20 includes the related information acquisition sensor 47b that acquires the related information that is the information related to the measurement of the measurement target, and the display light source 49 that generates display light that is light corresponding to the related information acquired by the related information acquisition sensor 47b.

### (5) Measurement Device

Fig. 10 illustrates the measurement device 50 used in the measurement system 10 (see Fig. 11) of the present exemplary embodiment in bottom view in a state of being mounted on the housing 20. In the present exemplary embodiment, a smartphone is used as the measurement device 50, but a tablet terminal having a camera function may be used as the measurement device 50. On a bottom surface side (so-called rear surface) of the measurement device 50, a camera 51 and an illumination unit 52 as a flash that emits visible light beside the camera are provided. Note that a top surface side (so-called front surface) of the measurement device 50 is a display unit 53.

### (6) Measurement System

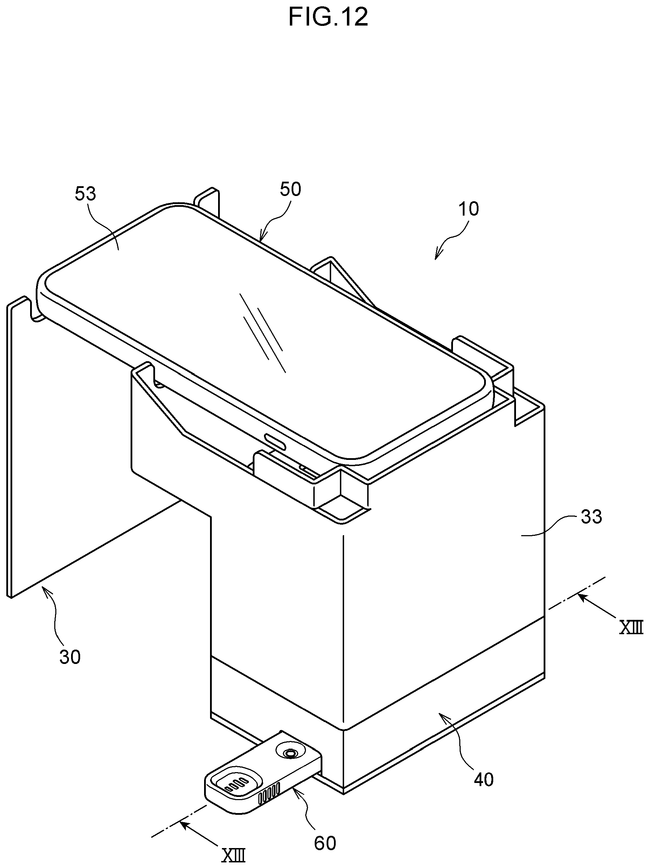

The measurement device 50 illustrated in Fig. 10 is mounted inside the attachment part 32 of the housing 20 illustrated in Fig. 9 by causing the display unit 53 to face upward while causing the camera 51 and the illumination unit 52 to face the measurement window 31, and thus, the measurement system 10 of the present exemplary embodiment as illustrated in an upper perspective view of Fig. 11 is constructed. In other words, the attachment part 32 in which the measurement window 31 is formed is provided in the housing 20, and the measurement device 50 is attached to the attachment part 32 such that the camera 51 faces the measurement window 31. As illustrated in an upper perspective view of Fig. 12 illustrating a state in which the front surface 34a, the left side surface 34c, and the right side surface 34d of the outer wall portion 34 are removed from this state, the measurement opening portion 43 and the identification opening portion 44 of the holding unit 40 are covered with the light shielding unit 33, and entry of light from an outside world is prevented.

In addition, as illustrated in Fig. 13 illustrating a cross section taken along line XIII-XIII in Fig. 12, the measurement opening portion 43 and the optical filter 45 are positioned above the measurement region 61 of the test strip 60, and the identification opening portion 44 is positioned above the identification region 62. Further, the measurement light source 42 that emits light to the measurement region 61 from obliquely above is installed on a slightly back surface side below the identification opening portion 44. The measurement window 31 of the attachment part 32 is positioned directly above the measurement opening portion 43, and the camera 51 of the measurement device 50 covers the identification region 62 in addition to the measurement region 61 within a field of view through the measurement window. That is, the measurement window 31 is formed at a position at which the test strip (specifically, the measurement region 61) and the display light source are simultaneously imageable by the camera 51 attached to the attachment part 32.

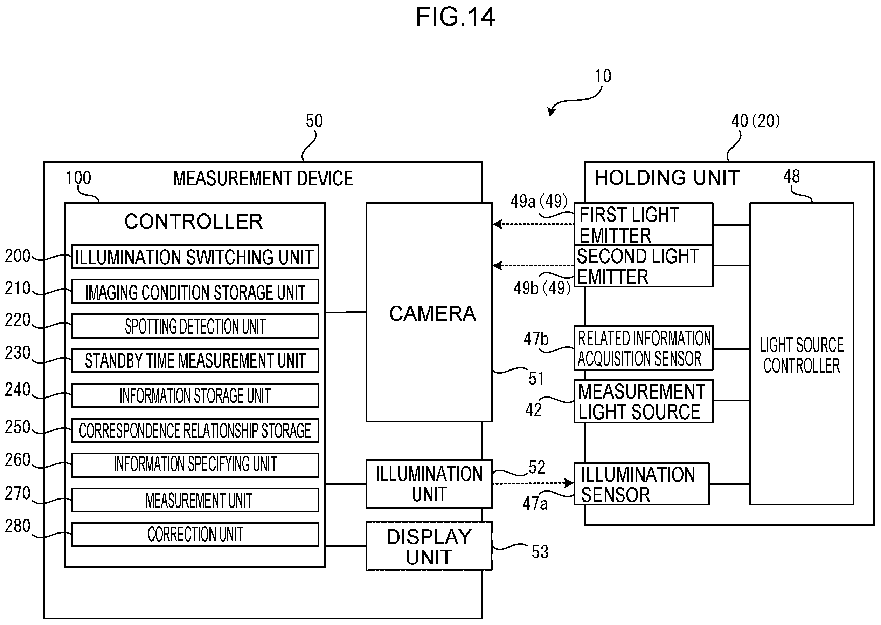

The related information acquisition sensor 47b acquires the environmental temperature as the related information of the holder 46. The acquired environmental temperature is associated with the display light of the light quantity corresponding to the related information by a correspondence relationship storage 250 (see Fig. 14) described later. Each of the first light emitter 49a and the second light emitter 49b constituting the display light source 49 generates display light associated through control by a light source controller 48. In other words, the display light source 49 includes plural light emitters, and the related information is expressed by a combination of positions of the plural light emitters and the display light. The environmental temperature and the display light are associated with each other as illustrated in, for example, Table 1 below.

**[Table 1]**

| Light quantity (%) | | First light emitter | | | | |
|---|---|---|---|---|---|---|
| | | 0 | 25 | 50 | 75 | 100 |
| | 0 | 10°C or lower | 15°C | 20°C | 25°C | 30°C |
| Second light emitter | 25 | 11°C | 16°C | 21°C | 26°C | 31°C |
| | 50 | 12°C | 17°C | 22°C | 27°C | 32°C |
| | 75 | 13°C | 18°C | 23°C | 28°C | 33°C |
| | 100 | 14°C | 19°C | 24°C | 29°C | 34°C or higher |

As illustrated in Table 1, in a case in which a maximum light quantity of each of the first light emitter 49a and the second light emitter 49b is 100%, the light quantity is adjusted in five stages of 0%, 25%, 50%, 75%, and 100%. Note that this stage of the light quantity is not limited to five stages, and may be any plural stages. Then, twenty-five kinds of environmental temperatures are displayed by a combination of light quantities of the first light emitter 49a and the second light emitter 49b. Here, the temperature in the above table may be, for example, a temperature obtained by rounding off the environmental temperature acquired by the related information acquisition sensor 47b to a first decimal place, or may be a temperature obtained by rounding up or rounding down the environmental temperature. In addition, one of the display light sources 49, for example, the second light emitter 49b can be a light source capable of steplessly adjusting light from 0% to 100%, and an environmental temperature after a decimal point can be expressed.

Further, in addition to the light emission by the adjustment of the light quantity as described above, the display light source 49 can also be configured to display the environmental temperature by a combination as represented in Table 1 above by, for example, a frequency (Hz) of turning on and off the light emission (that is, the number of times of turning on and off per unit time) or the number of times of turning on and off (that is, how many times turning on and off is performed continuously). In addition, the display light source may be configured such that the environmental temperature is displayed by turning on and off a predetermined number of times while changing each of a time width of turning on and a time width of turning off. Further, the environmental temperature may be determined by imaging the turning on and off the display light source 49 as a moving image by the camera 51 (see Fig. 14) described later and analyzing the imaged moving image by the controller 100 (see Fig. 14) described later.

In addition, the display light source 49 can generate reference light having a reference light quantity serving as a reference of the intensity of the display light separately from the display light. The reference light quantity is preferably the maximum light quantity of 100% described above, but any light quantity may be used as the reference light quantity.

Note that the display light source 49 does not need to include two light sources as described above, and may include one light source or three or more light sources. Further, the related information displayed by the display light source 49 is not limited to the environmental temperature of the holder 46 as described above, and, for example, even the environmental humidity or the carbon dioxide concentration of the holder 46 can be expressed in the correspondence relationship as described above, and not only the related information but also information such as the number of times of insertion of the test strip 60 and the degree of wear of the measurement light source 42 can be expressed in the correspondence relationship as described above.

Fig. 14 is a functional block diagram illustrating the measurement system 10 of the present exemplary embodiment. The camera 51 and the illumination unit 52 illustrated in Fig. 10, the display unit 53 illustrated in Fig. 11, and the controller 100 that controls these units are provided in the measurement device 50. The controller 100 functions as the following units by using a CPU 110, a ROM 120, a RAM 130, and a storage device 150 described later as hardware resources of a computer.

That is, the controller 100 functions as an illumination switching unit 200 that switches between turning-on and turning-off of illumination by the illumination unit 52. Specifically, the illumination switching unit 200 can be realized as an application installed in the measurement device 50, but can also be realized as a unit using electric or optical sensing with the holding unit 40 or as a wireless communication unit (for example, Bluetooth (registered trademark) or the like) with the holding unit 40. In addition, the controller 100 functions as an imaging condition storage unit 210 that stores imaging conditions by the camera 51. Conditions defined as the imaging conditions include, for example, a standby time required for a reaction between the measurement target and the reagent. In addition, the controller 100 functions as a spotting detection unit 220 that detects spotting of the sample on the test strip 60 through the camera 51. In addition, the controller 100 functions as a standby time measurement unit 230 that measures a standby time. Furthermore, the controller 100 functions as an information storage unit 240 that stores an image of the measurement region 61 imaged by the camera 51.

Further, the controller 100 functions as the correspondence relationship storage 250 that stores in advance the correspondence relationship between the related information and the display light. In addition, the controller 100 functions as an information specifying unit 260 that analyzes an image of the display light imaged by the camera 51 to identify the display light, applies the identified display light to the correspondence relationship stored in the correspondence relationship storage 250, and specifies the related information. In addition, the controller 100 functions as a measurement unit 270 that measures the measurement target applied to the test strip 60 attached to the measurement region 61 based on the image imaged by the camera 51 and acquires a measurement value. In other words, the measurement device 50 includes the measurement unit 270 that measures the measurement target applied to the test strip 60 housed in the holder and acquires the measurement value. Further, the controller 100 functions as a correction unit 280 that corrects the measurement value acquired by the measurement unit 270 based on the related information specified by the information specifying unit 260.

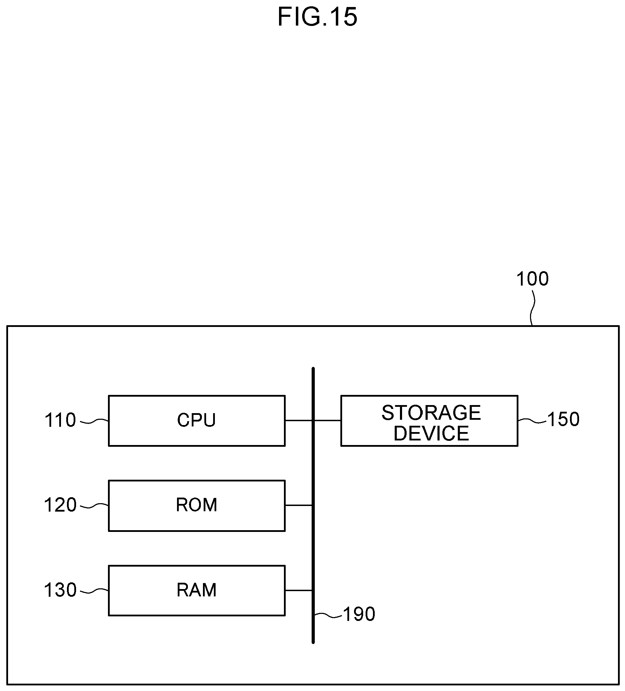

As illustrated in a hardware configuration of Fig. 15, the controller 100 includes the central processing unit (CPU) 110, the read only memory (ROM) 120, the random access memory (RAM) 130, and the storage device 150. The components are connected to communicate with each other via a bus 190.

The CPU 110 is a central processing unit, and executes various programs and controls each unit. That is, the CPU 110 reads the program from the ROM 120 and the storage device 150, and executes the program with the RAM 130 as a work area. The CPU 110 controls the measurement system 10 according to the program recorded in the ROM 120 or the storage device 150.

The ROM 120 stores various programs and various kinds of data. The RAM 130 temporarily stores a program or data as a work area. The storage device 150 is a storage by a hard disk drive (HDD), a solid state drive (SSD), or a flash memory, and stores various programs including an operating system and various kinds of data.

On the other hand, the holding unit 40, which is a part of the housing 20, includes the measurement light source 42 that emits light to the measurement region 61, the illumination sensor 47a that detects the turning-on and turning-off of the illumination unit 52, and the light source controller 48 that turns on the measurement light source 42 when a signal from the illumination sensor 47a is input. Further, the holding unit 40 further includes the related information acquisition sensor 47b, and the display light source 49 including the first light emitter 49a and the second light emitter 49b. Furthermore, the light source controller 48 controls the generation of the display light by the display light source 49, and switches between the display light and the reference light to cause the display light source 49 to emit light. That is, the housing 20 includes the light source controller 48 that controls the generation of the display light by the display light source 49. The light source controller 48 is configured to be a hardware resource of a computer similarly to the controller 100 of the measurement device 50. Note that the light source controller 48 can realize that the measurement light source 42 is turned on regardless of an input mode (for example, in a wired or wireless manner) of the signal from the illumination sensor 47a as long as it is possible to perform control to turn on the measurement light source 42 at the time of imaging the measurement region 61 described later. In addition, the light source controller 48 can also perform control to turn off the measurement light source 42. The light source controller 48 stores the same correspondence relationship as the correspondence relationship stored in the correspondence relationship storage 250.

As described above, the measurement system 10 of the present exemplary embodiment includes the housing 20 that includes the insertion port 41 into which the test strip 60 having the measurement region 61 and the identification region 62 is inserted, the holder 46 that houses the test strip 60 inserted from the insertion port 41 inside, the measurement window 31 facing the test strip 60 housed in the holder 46, and the measurement device 50 that includes the illumination unit 52 that illuminates the identification region 62 of the test strip 60 housed in the holder 46 and the camera 51 that images the measurement region 61 and the identification region 62. The housing 20 includes the mounting unit 30 for mounting the measurement device 50 on an outer surface in a state in which the camera 51 and the illumination unit 52 are disposed at positions facing the measurement window 31, the holding unit 40 for holding the test strip 60 housed in the holder 46 inside, and the measurement light source 42 provided at a position for emitting light to the measurement region 61 inside the holding unit 40. Furthermore, in the measurement system 10, as will be described later, the illumination unit 52 is turned off while the measurement light source 42 is turned on at the time of imaging the measurement region 61 by the camera 51, and the illumination unit 52 is turned on at the time of imaging the identification region 62 by the camera 51. With such a configuration, in the measurement system 10 of the present exemplary embodiment, in a case in which there are plural imaging regions (that is, the measurement region 61 and the identification region 62) in the test strip 60, imaging using an appropriate light source can be performed in accordance with an imaging region.

Further, the measurement system 10 of the present exemplary embodiment also includes the housing 20 that includes the related information acquisition sensor 47b that acquires the related information that is the information related to the measurement of the measurement target and the display light source 49 that generates the display light that is the light corresponding to the related information acquired by the related information acquisition sensor 47b, and also includes the measurement device 50 that includes the correspondence relationship storage 250 that stores in advance the correspondence relationship (for example, the correspondence relationship as illustrated in Table 1 described above) between the related information and the display light, the camera 54 that images the display light to acquire the image, and the information specifying unit 260 that analyzes the image to identify the display light, applies the identified display light to the correspondence relationship stored in the correspondence relationship storage 250, and specifies the related information. Furthermore, the information specifying unit 260 specifies the intensity of the display light imaged by the camera 51 based on the reference light imaged by the camera 51. At this time, the information specifying unit 260 specifies the positions of the plural light emitters constituting the display light source 49, and identifies the display light for each specified position.

Here, the controller 100 functioning as the illumination switching unit 200 that switches between turning-on and turning-off of the illumination by the illumination unit 52 can perform control to turn on the illumination unit 52 at the time of imaging the identification region 62 and to turn off the illumination unit 52 at the time of imaging the measurement region 61. In addition, the light source controller 48 can perform control to turn on the measurement light source 42 at the time of imaging the measurement region 61. In addition, from the viewpoint of preventing the wear of the measurement light source 42, the light source controller 48 preferably performs control to turn off the measurement light source 42 at the time of imaging the identification region 62.

Here, as described above, the measurement region 61 is a region in which the measurement target in the test strip 60 is measured, and the identification region 62 is a region in which the identification information of the test strip 60 is recorded. In the measurement region, the measurement target in the sample is detected by color development by the reagent that specifically reacts with the measurement target in the target reaction zone, capture of the measurement target by the reagent that specifically binds to the measurement target, or the like. Examples of the identification region include a region to which a barcode, a QR code (registered trademark), or the like is attached. Examples of the identification information recorded in the identification region include a type of the test paper 64 housed in the test strip 60, measurement conditions suitable for the test strip 60, lot information of the test strip 60, and the like. In addition, the measurement light source 42 is a light source suitable for detecting the measurement target in the measurement region 61 as the measurement region. For example, in a case in which a substance that reacts with the measurement target in the target reaction zone of the measurement region 61 absorbs ultraviolet light, the measurement light source 42 can perform appropriate imaging by using ultraviolet light. Note that, as a result, the measurement light source 42 having a wavelength corresponding to the measurement target can be used to image the measurement region 61, and the illumination unit 52 of the measurement device 50 can be used as a light source to image the identification region 62.

Since the illumination unit 52 is generally a flash of the measurement device 50 that emits visible light, the identification region 62 is preferably a region including an object that can be measured with visible light.

Note that, at the time of imaging the identification region 62 by the camera 51, the measurement light source 42 is preferably turned off while the illumination unit 52 is turned on. As a result, since the measurement light source 42 can be turned on only when it is necessary to image the measurement region 61, the wear of the measurement light source 42 can be prevented.

### (7) Method of Specifying Related Information by Measurement System

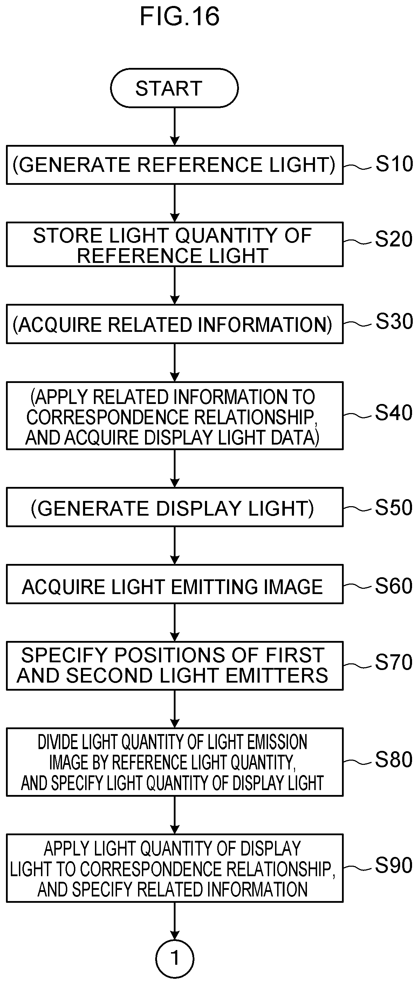

An example of a method of specifying the environmental temperature as the related information by the measurement system 10 of the present exemplary embodiment will be described with reference to a flowchart of Fig. 16. Note that, in this flowchart, an outline of a stage indicating an operation other than the operation directly performed by the measurement device 50 is displayed in parentheses.

First, as illustrated in Fig. 11, the measurement system 10 on which the measurement device 50 is mounted is prepared in the housing 20 in which the holding unit 40 is attached to the mounting unit 30, and the test strip 60 is inserted from the insertion port 41. At this stage, when a screen of the display unit 53 (see Fig. 11 and Fig. 14) is operated, a measurement application installed in the measurement device 50 is activated, and the measurement of the environmental temperature is started prior to the measurement.

First, at a stage illustrated in S10, the light source controller 48 switches between light emission modes of the display light source 49, and generates the reference light having the above-described reference light quantity from the display light source 49 (the first light emitter 49a and the second light emitter 49b). Subsequently, at a stage illustrated in S20, the camera 51 images the reference light generated from the display light source 49, and stores, as image data, the light quantity of the reference light as the reference light quantity in the information storage unit 240. The stored reference light quantity is 100%, which is the maximum light quantity of the display light, and is referred to in the following stages. Note that these two stages are arbitrary, and, for example, only a first measurement in a day may be performed as calibration of the reference light quantity, and the reference light quantity stored in the first measurement may be used in a subsequent measurement. In addition, at a point in time at which a predetermined number of times of measurement has passed, the reference light may be generated again at the stage illustrated in S10, and then the reference light may be stored as the reference light quantity at the stage illustrated in S20. Thus, the calibration of the reference light may be performed again, if appropriate.

On the other hand, in the holding unit 40, the related information acquisition sensor 47b acquires, as the related information, the environmental temperature of the holder 46 at a stage illustrated in S30. Regarding the acquired environmental temperature, the light source controller 48 refers to the correspondence relationship as illustrated in Table 1 described above at a stage illustrated in S40, and determines the light quantity of each of the first light emitter 49a and the second light emitter 49b. Subsequently, at a stage illustrated in S50, each of the first light emitter 49a and the second light emitter 49b generates the display light with the light quantity determined by the light source controller 48.

Then, at a stage illustrated in S60, the camera 51 images, as a light emission image, the display light generated from the display light source 49, and acquires the display light as the image data. Subsequently, at a stage illustrated in S70, the information specifying unit 260 specifies the positions of the plural light emitters, that is, the first light emitter 49a and the second light emitters 49b, from the image data of the light emission image. In other words, it is specified which one of two light emission images present in the image data is caused by the first light emitters 49a and which is caused by the second light emitters 49b.

Subsequently, at a stage illustrated in S80, the information specifying unit 260 divides the light quantity of the light emission image by the reference light quantity stored in the information storage unit 240 at the stage illustrated in S20, and specifies the light quantity of the display light for each of the first light emitter 49a and the second light emitter 49b. Then, the processing proceeds to a stage illustrated in S90, and the information specifying unit 260 applies the specified light quantity of the display light to the correspondence relationship stored in the correspondence relationship storage 250 and specifies the temperature information as the related information. The specified temperature information is stored in the information storage unit 240 and is used for correction of the measurement value described later.

Note that, in the above exemplary embodiment, although the reference light is generated in the display light source 49 and then the display light is generated, the present invention is not limited thereto, and the reference light may be generated after the display light is generated in the display light source 49. Specifically, stages illustrated in S10 and S20 in Fig. 16 may be executed after the stage illustrated in S60.

### (8) Method for Measuring Measurement Target by Measurement System

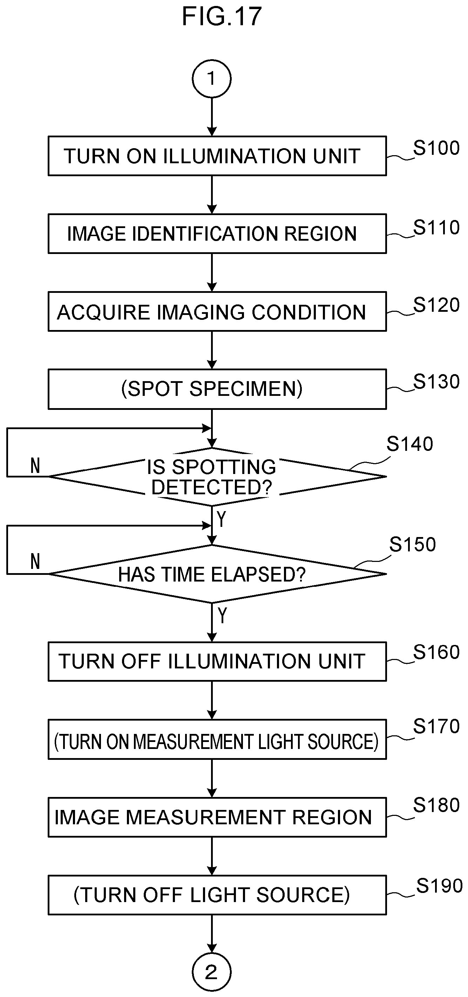

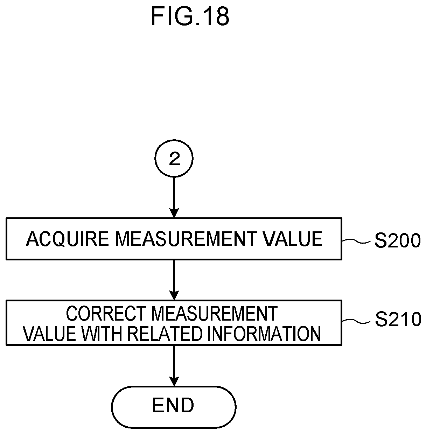

An example of a method of measuring the measurement target by the measurement system 10 of the present exemplary embodiment will be described with reference to flowcharts of Fig. 17 and Fig. 18. Note that, in these flowcharts, an outline of a stage indicating an operation other than the operation directly performed by the measurement device 50 is displayed in parentheses.

First, at a stage illustrated in S100 of Fig. 17, the illumination switching unit 200 (see Fig. 14) turns on the illumination unit 52. At this stage, the measurement light source 42 of the holding unit 40 is turned off. Subsequently, at a stage illustrated in S110, the camera 51 images the identification region 62 by using the illumination unit 52 as the light source. When the imaging is completed, the processing proceeds to a stage illustrated in S120.

At the stage illustrated in S120, the controller 100 refers to the imaging condition storage unit 210 (see Fig. 14) from the imaged image of the identification region 62 to acquire the imaging condition at the time of measurement by the test strip 60.

Meanwhile, during this period, an appropriate amount of sample is spotted to the sample spotting unit 63 (see Fig. 3) of the test strip 60 by a measurer. The spotted sample is spread to the downstream side by the test paper 64 (see Fig. 3) inside the test strip 60.

During this time, the spotting detection unit 220 of the controller 100 (see Fig. 14) continues to monitor whether or not the image indicating that spotting is completed (for example, the control reaction zone generated by the reaction with the measurement target) is detected in the measurement region 61 through the image from the camera 51 at a stage illustrated in S140. When such an image is detected, the processing proceeds to a stage illustrated in S150.

At the stage illustrated in S150, after the detection of the completion of spotting at the stage illustrated in S140, the standby time measurement unit 230 (see Fig. 14) of the controller 100 continues to monitor whether or not a standby time required for the reaction between the measurement target and the reagent on the test paper 64 has elapsed in the imaging conditions acquired at the stage illustrated in S120.

When the standby time measurement unit 230 determines that the standby time has elapsed at the stage illustrated in S150, the illumination switching unit 200 turns off the illumination unit 52 at a stage illustrated in S160.

On the other hand, at a stage illustrated in S170, in the holding unit 40, when the light source controller 48 detects the turning-off of the illumination unit 52 through the illumination sensor 47a (see Fig. 1 and Fig. 14), the measurement light source 42 is turned on.

When the measurement light source 42 is turned on, the camera 51 images the target reaction zone visualized at the wavelength of the measurement light source 42 in the measurement region 61 at a stage illustrated in S180. When the imaging is completed, the light source controller 48 of the holding unit 40 turns off the measurement light source 42. Note that the imaged image is stored in the information storage unit 240 (see Fig. 14), and then is provided for acquisition of the measurement value (specifically, a content of the measurement target) by the measurement unit 270 at a stage illustrated in S200 of Fig. 18.

Necessary correction is performed on the measurement value acquired at the stage illustrated in S200 by the correction unit 280 at a stage illustrated in S210 while referring to the environmental temperature as the related information acquired at the stage illustrated in S90 in Fig. 16 and stored in the information storage unit 240. For example, the measurement value can be corrected by measuring the measurement target in advance under the same condition except for the environmental temperature, storing, as calibration curve information, the relationship between the environmental temperature and a change rate of the measurement value due to the environmental temperature in advance in the information storage unit 240, and multiplying the obtained measurement value by the change rate obtained from the environmental temperature.

### (9) Others

In the measurement system 10 of the above exemplary embodiment, although the housing 20 is formed by combining the separate holding unit 40 with the mounting unit 30, the housing 20 may have a structure in which the mounting unit 30 and the holding unit 40 are integrated. In this case, the insertion port 41 is provided in the housing 20, and a space provided at the back serves as the holder 46. The test strip 60 is inserted from the insertion port 41, and the measurement region 61 and the identification region 62 of the test strip 60 housed in the holder 46 are used for imaging by the camera 51 of the measurement device 50 as in the above-described exemplary embodiment.

In addition, although the test strip 60 has the structure in which the test paper 64 is housed as described in the above exemplary embodiment, for example, the test paper 64 itself such as a urine test paper may be used as the test strip 60. In this case, not only the measurement region 61 but also the identification region 62 is provided on the test paper 64 as the test strip 60. Moreover, in this case, as described in the above exemplary embodiment, a water absorbent such as a filter paper or a synthetic resin substrate having a water absorbing layer applied on the front surface thereof can be used as the material of the test paper 64.

Note that, in the above exemplary embodiment, although the specification of the related information is performed prior to the measurement of the measurement target, the disclosure is not limited thereto. For example, the related information may be specified in the middle of or after the measurement of the measurement target. For example, the related information may be specified in the middle of S100 to S190 in Fig. 17. At this time, for example, the light source controller 48 may cause the display light source 49 to generate the reference light as illustrated in S10 by using, as a trigger, the detection of the turning-off of the illumination unit 52 at the stage illustrated in S160 by the illumination sensor 47a of the holding unit 40. Alternatively, the related information may be specified after the stage illustrated in S200 of Fig. 18.

### Industrial Applicability

The invention can be used for a measurement system that spreads a measurement target in a sample with a test strip and optically detects the measurement target.

## Claims

1. A measurement system (10), comprising:
a housing (20) that includes:
a related information acquisition sensor (47b) configured to acquire related information, which is information related to measurement of a measurement target,
a display light source (49) configured to generate display light, which is light corresponding to the related information acquired by the related information acquisition sensor (47b), and
a light source controller (48) configured to control the generation of the display light by the display light source (49); and
a measurement device (50) that includes:
a correspondence relationship storage (250) configured to store a correspondence relationship between the related information and the display light in advance,
a camera (51) configured to image the display light to acquire an image, and
an information specifying unit (260) configured to analyze the image and identify the display light, apply the identified display light to the correspondence relationship stored in the correspondence relationship storage (250), and specify the related information,
wherein the display light source (49) includes a plurality of light emitters (49a, 49b),
**characterized in that**
the light source controller (48) is configured to express
the related information by a combination of positions of the plurality of light emitters (49a, 49b) and the display light, whereby the light source controller (48) is configured so that
the light quantity of the display light source (49) can be adjusted in a plurality of stages.

2. The measurement system (10) according to claim 1, wherein the display light source (49) is configured to generate reference light having a reference light quantity as a reference of intensity of the display light, and the light source controller (48) is configured to switch between the display light and the reference light to cause the display light source (49) to emit light.

3. The measurement system (10) according to claim 2, wherein the information specifying unit (260) is configured to specify the intensity of the display light imaged by the camera (51) based on the reference light imaged by the camera (51).

4. The measurement system (10) according to claim 1, wherein the information specifying unit (260) is configured to specify the positions of the plurality of light emitters (49a, 49b), and specify the display light for each of the specified positions.

5. The measurement system (10) according to claim 1, wherein a holder (46) that houses a test strip (60), to which the measurement target is applied, is provided in the housing (20), and
the measurement device (50) includes a measurement unit (230) configured to measure the measurement target applied to the test strip (60) housed in the holder (46) to acquire a measurement value, and a correction unit (280) configured to correct the measurement value acquired by the measurement unit (230) based on the related information specified by the information specifying unit (260).

6. The measurement system (10) according to claim 5, wherein an attachment part (32), in which a measurement window (31) is formed, is provided in the housing (20), and
the measurement device (50) is attached to the attachment part (32) such that the camera (51) faces the measurement window (31).

7. The measurement system (10) according to claim 6, wherein the measurement window (31) is formed at a position at which the test strip (60) and display light source (49) are simultaneously imagable by the camera (51) attached to the attachment part (32).

8. The measurement system (10) according to any one of claims 1 to 7, wherein the related information is an environmental temperature, and the related information acquisition sensor (47b) is a temperature sensor.

## Patentansprüche

1. Messsystem (10), umfassend:
ein Gehäuse (20), das Folgendes einschließt:
einen Sensor (47b) zur Erfassung der zugehörigen Informationen, der ausgebildet ist, zugehörige Informationen zu erfassen, die Informationen sind, die sich auf die Messung eines Messobjekts beziehen,
eine Anzeigelichtquelle (49), die ausgebildet ist, Anzeigelicht zu erzeugen, das Licht ist, das den durch den Sensor (47b) zur Erfassung der zugehörigen Informationen erfassten zugehörigen Informationen entspricht, und
eine Lichtquellensteuerung (48), die ausgebildet ist, die Erzeugung des Anzeigelichts durch die Anzeigelichtquelle (49) zu steuern; und
eine Messvorrichtung (50), die Folgendes einschließt:
einen Zuordnungsbeziehungsspeicher (250), der ausgebildet ist, eine Zuordnungsbeziehung zwischen den zugehörigen Informationen und dem Anzeigelicht im Voraus zu speichern,
eine Kamera (51), die ausgebildet ist, das Anzeigelicht abzubilden, um ein Bild zu erfassen, und
eine Informationsbestimmungseinheit (260), die ausgebildet ist, das Bild zu analysieren und das Anzeigelicht zu identifizieren, das identifizierte Anzeigelicht auf die im Zuordnungsbeziehungsspeicher (250) gespeicherte Zuordnungsbeziehung anzuwenden, und die zugehörigen Informationen zu bestimmen,
wobei die Anzeigelichtquelle (49) eine Vielzahl von Lichtemittern (49a, 49b) einschließt,
**dadurch gekennzeichnet, dass**
die Lichtquellensteuerung (48) ausgebildet ist, die zugehörigen Informationen durch eine Kombination von Positionen der Vielzahl von Lichtemittern (49a, 49b) und dem Anzeigelicht auszudrücken,
wobei die Lichtquellensteuerung (48) derart ausgebildet ist, dass die Lichtmenge der Anzeigelichtquelle (49) in einer Vielzahl von Stufen eingestellt werden kann.

2. Messsystem (10) nach Anspruch 1, wobei die Anzeigelichtquelle (49) ausgebildet ist, Referenzlicht zu erzeugen, das eine Referenzlichtmenge als eine Referenz der Intensität des Anzeigelichts aufweist, und die Lichtquellensteuerung (48) ausgebildet ist, zwischen dem Anzeigelicht und dem Referenzlicht umzuschalten, um die Anzeigelichtquelle (49) zum Aussenden von Licht zu veranlassen.

3. Messsystem (10) nach Anspruch 2, wobei die Informationsbestimmungseinheit (260) ausgebildet ist, die Intensität des von der Kamera (51) abgebildeten Anzeigelichts, basierend auf dem von der Kamera (51) abgebildeten Referenzlicht, zu bestimmen.

4. Messsystem (10) nach Anspruch 1, wobei die Informationsbestimmungseinheit (260) ausgebildet ist, die Positionen der Vielzahl von Lichtemittern (49a, 49b) zu bestimmen, und das Anzeigelicht für jede der bestimmten Positionen zu bestimmen.

5. Messsystem (10) nach Anspruch 1, wobei in dem Gehäuse (20) ein Halter (46) bereitgestellt ist, in dem ein Teststreifen (60) untergebracht ist, auf den das Messobjekt angewendet wird, und
die Messvorrichtung (50) eine Messeinheit (230), die ausgebildet ist, das auf den im Halter (46) untergebrachten Teststreifen (60) angewendete Messobjekt zu messen, um einen Messwert zu erfassen, und eine Korrektureinheit (280) einschließt, die ausgebildet ist, den von der Messeinheit (230) erfassten Messwert basierend auf den von der Informationsbestimmungseinheit (260) bestimmten zugehörigen Informationen zu korrigieren.

6. Messsystem (10) nach Anspruch 5, wobei in dem Gehäuse (20) ein Befestigungsteil (32) bereitgestellt ist, in dem ein Messfenster (31) gebildet ist, und
die Messvorrichtung (50) an dem Befestigungsteil (32) derart befestigt ist, dass die Kamera (51) dem Messfenster (31) gegenüberliegt.

7. Messsystem (10) nach Anspruch 6, wobei das Messfenster (31) an einer Position gebildet ist, an der der Teststreifen (60) und die Anzeigelichtquelle (49) gleichzeitig durch die an dem Befestigungsteil (32) befestigte Kamera (51) abbildbar sind.

8. Messsystem (10) nach einem der Ansprüche 1 bis 7, wobei die zugehörigen Informationen eine Umgebungstemperatur sind, und der Sensor (47b) zur Erfassung der zugehörigen Informationen ein Temperatursensor ist.

## Revendications

1. Système de mesure (10), comprenant :
un boîtier (20) qui inclut :
un capteur d'acquisition d'information associée (47b) configuré pour acquérir une information associée, qui est une information liée à la mesure d'une cible de mesure,
une source lumineuse d'affichage (49) configurée pour générer une lumière d'affichage, qui est une lumière correspondant à l'information associée acquise par le capteur d'acquisition d'information associée (47b), et
un dispositif de commande de source lumineuse (48) configuré pour commander la génération de la lumière d'affichage par la source lumineuse d'affichage (49) ; et
un dispositif de mesure (50) qui inclut :
une unité de stockage de relations de correspondance (250) configurée pour stocker à l'avance une relation de correspondance entre l'information associée et la lumière d'affichage,
une caméra (51) configurée pour capturer la lumière d'affichage afin d'acquérir une image, et
une unité de spécification d'information (260) configurée pour analyser l'image et identifier la lumière d'affichage, appliquer la lumière d'affichage identifiée à la relation de correspondance stockée dans l'unité de stockage de relations de correspondance (250), et spécifier l'information associée,
dans lequel la source lumineuse d'affichage (49) inclut une pluralité d'émetteurs de lumière (49a, 49b),
**caractérisé en ce que**
le dispositif de commande de source lumineuse (48) est configuré pour exprimer l'information associée par une combinaison de positions de la pluralité d'émetteurs de lumière (49a, 49b) et de la lumière d'affichage, selon lequel le dispositif de commande de source lumineuse (48) est configuré de telle sorte que la quantité de lumière de la source lumineuse d'affichage (49) puisse être ajustée en une pluralité d'étapes.

2. Système de mesure (10) selon la revendication 1, dans lequel la source lumineuse d'affichage (49) est configurée pour générer une lumière de référence présentant une quantité de lumière de référence comme référence d'intensité de la lumière d'affichage, et le dispositif de commande de source lumineuse (48) est configuré pour commuter entre la lumière d'affichage et la lumière de référence pour amener la source lumineuse d'affichage (49) à émettre de la lumière.

3. Système de mesure (10) selon la revendication 2, dans lequel l'unité de spécification d'information (260) est configurée pour spécifier l'intensité de la lumière d'affichage capturée par la caméra (51) sur la base de la lumière de référence capturée par la caméra (51).

4. Système de mesure (10) selon la revendication 1, dans lequel l'unité de spécification d'information (260) est configurée pour spécifier les positions de la pluralité d'émetteurs de lumière (49a, 49b), et spécifier la lumière d'affichage pour chacune des positions spécifiées.

5. Système de mesure (10) selon la revendication 1, dans lequel un support (46) qui contient une bandelette de test (60), à laquelle la cible de mesure est appliquée, est prévu dans le boîtier (20), et
le dispositif de mesure (50) inclut une unité de mesure (230) configurée pour mesurer la cible de mesure appliquée à la bandelette de test (60) logée dans le support (46) afin d'acquérir une valeur de mesure, et une unité de correction (280) configurée pour corriger la valeur de mesure acquise par l'unité de mesure (230) sur la base de l'information associée spécifiée par l'unité de spécification d'information (260).

6. Système de mesure (10) selon la revendication 5, dans lequel une partie de fixation (32), dans laquelle une fenêtre de mesure (31) est formée, est prévue dans le boîtier (20), et
le dispositif de mesure (50) est fixé à la partie de fixation (32) de telle sorte que la caméra (51) fasse face à la fenêtre de mesure (31).

7. Système de mesure (10) selon la revendication 6, dans lequel la fenêtre de mesure (31) est formée à une position à laquelle la bandelette de test (60) et la source lumineuse d'affichage (49) peuvent être capturées simultanément par la caméra (51) fixée à la partie de fixation (32).

8. Système de mesure (10) selon l'une quelconque des revendications 1 à 7, dans lequel l'information associée est une température environnementale, et le capteur d'acquisition d'information associée (47b) est un capteur de température.
